Europäisches Patentamt

European Patent Office

Office européen des brevets

(19)

(11) Veröffentlichungsnummer: **0 249 172**
**B1**

(12) **EUROPÄISCHE PATENTSCHRIFT**

(45) Veröffentlichungstag der Patentschrift: **16.01.91**

(21) Anmeldenummer: **87108215.2**

(22) Anmeldetag: **05.06.87**

(51) Int. Cl.⁵: **C 02 F 3/12, C 02 F 3/20**

(54) **Verfahren zur biologischen Reinigung von Abwässern.**

(30) Priorität: **13.06.86 DE 3619954**

(43) Veröffentlichungstag der Anmeldung:
**16.12.87 Patentblatt 87/51**

(45) Bekanntmachung des Hinweises auf die
Patenterteilung:
**16.01.91 Patentblatt 91/03**

(84) Benannte Vertragsstaaten:
**AT BE CH DE ES FR GB GR IT LI LU NL SE**

(56) Entgegenhaltungen:
**EP-A-0 068 364**
**EP-A-0 145 647**
**DE-A-2 042 545**
**DE-A-2 834 899**
**GB-A- 1 141**
**GB-A- 9 989**

Die Akte enthält technische Angaben, die nach
dem Eingang der Anmeldung eingereicht
wurden und die nicht in dieser Patentschrift
enthalten sind.

(73) Patentinhaber: **Von Nordenskjöld, Reinhard, Dr.-Ing.**
**Am Jagdweg 4**
**D-8011 Solalinden (DE)**

(72) Erfinder: **Von Nordenskjöld, Reinhard, Dr.-Ing.**
**Am Jagdweg 4**
**D-8011 Solalinden (DE)**

(74) Vertreter: **Patentanwälte Grünecker, Kinkeldey,**
**Stockmair & Partner**
**Maximilianstrasse 58**
**D-8000 München 22 (DE)**

Courier Press, Leamington Spa, England.

## Beschreibung

Die Erfindung betrifft das Gebiet der weitergehenden biologischen Reinigung von Abwässern.

In der DE—A—28 34 899 wird ein biologisches Reinigungsverfahren beschrieben, bei dem mehrere zueinander beabstandete schwimmend aufgehängte und eine Wanderbewegung ausführende Belüfterketten eingesetzt werden, welche eine weitflächige un gleichmäßige Belüftung und Umwälzung des entstehenden Belebtschlammes in dem Abwasser bewirken. Diese Anlagen zeichnen sich insbesondere dadurch aus, daß sich in großen, vorzugsweise in Erdbauweise erstellten Erdbecken ein geregeltes, schwach belastetes Belebtschlammverfahren ohne eine totale, mechanische Umwälzung des Beckeninhalts durchführen läßt, d.h., die Steuerung der verschiedensten Lebensbedingungen für den Belebtschlamm im Becken sind jederzeit mit vergleichsweise geringem Energieaufwand beherrschbar.

Zur Belüftung und Umwälzung wird bei der bekannten Belebtanlage die Luft gleichzeitig in allen Bereichen der vorhandenen Bodenbelüfter in das Becken eingetragen, so daß sich ein über die Beckenlänge gleichmäßiger Eintrag ergibt. Durch die Wanderbewegung der Ketten wird u.a. erreicht, daß der Belebtschlamm sich an keiner Stelle des Beckens solange absetzt, daß er Schaden nimmt.

Die bis auf den Boden reichenden Bodenbelüfter, die in einer hin- und hergehenden Bewegung den Beckenboden bei der bekannten Anlage überstreichen, erfassen den Belebtschlamm, wälzen ihn um und reißen ihn örtlich durch den aufströmenden Luft- und Wasserstrom auch vom Boden mit und verhindern dadurch auch, daß eine sich ggf. ablagernde Teilmenge des Belebtschlamms zu lange ohne Sauerstoffversorgung am Boden liegen bleibt.

Trotz des vergleichsweise niedrigen spezifischen Umwälzenergieaufwandes dieses Systems kann es in Zeiten schwacher Belastung, wie z.B. in Nachstunden, an Wochenenden usw. dazu kommen, daß mehr Energie für die Umwälzung verbraucht wird, als dies eigentlich zur $O_2$-Versorgung nötig bzw. gut wäre. Dies führt zu unerwünschten $O_2$-Gehalten im Becken, d.h. zu einer unerwünschten Verfahrensbeeinflussung.

Reinigungsanlagen, die mit am Beckenboden fest installierten Bodenbelüftern arbeiten oder düsenartige Umwälzeinrichtungen aufweisen, gehören zur Gruppe der stark belasteten Anlagen, die mit einem Grundenergieaufwand von 10—15 $W/m^3$ gefahren werden. Sie setzen außerdem einen horizontalen, gut befestigten Beckenboden voraus, damit die darauf befestigten Eintragsdüsen horizontal angeordnet werden können, was Voraussetzung für einen gleichmäßigen Eintrag ist. Bei solchen Anlagen hat man immer wieder versucht, mit intermittierender Luftbeaufschlagung der einzelnen fest installierten Bodenbelüfter zu arbeiten. Erste Versuche gehen auf das Jahr 1915 zurück, wie die britische Druckschrift GB—A—1141 dokumentiert. Jüngste Bemühungen in dieser Richtung sind in der europäischen Patentanmeldung EP—A—01 45 647 beschrieben. Bei diesen Anlagen treten jedoch verschiedene Probleme auf. Eines der wesentlichsten Probleme in diesem Zusammenhang liegt darin, daß die fest installierten Bodenbelüfter zu Verstopfungen neigen, was sich insbesondere dann stark bemerkbar macht, wenn derartige Anlagen im intermittierenden Betrieb gefahren werden. Sobald aber eine mit fest installierten Bodenbelüftern arbeitende Anlage verstopft ist, ist eine Reinigung nur dann möglich, wenn man die Anlage ganz abschaltet und die Becken entleert. Dies führt zu Ausfallzeiten der Anlage und ist außerdem mit einem sehr großen Aufwand verbunden. Darüber hinaus lagert sich nicht nur auf den Bodenbelüftern, sondern vor allem auch zwischen den Bodenbelüftern im Bereich der abgeschalteten Bodenbelüfter Schlamm ab, der auch nach Anschalten der Bodenbelüfter nicht mehr in eine Umwälzbewegung überführt werden kann, sondern am Boden liegen bleibt, ggf. abstirbt und den gesamten Belebtschlammprozeß in äußerst negativer Weise beeinflussen kann bzw. zum Erliegen bringt.

Auch aus der GB—A—9989 ist ein intermittierend durchgeführter Lufteintrag bekannt, wobei dort die Bodenbelüfter fest installiert in einer Tankanlage angeordnet sind. Um ein Absetzen des Schlamms zu verhindern, wird feinflächig über den Boden verteilt der Lufteintrag vorgenommen, wobei alle Bereiche abwechselnd Luftbeaufschlagt werden.

Zur Durchführung von bestimmten Sonderprozessen, z.B. einer Denitrifizierung sind im Stand der Technik verschiedene Anlagen bekannt. So ist es bekannt, mit einem gesonderten vorgeschalteten Denitrifizierungsbecken zu arbeiten. Es ist auch bekannt, mehrere Becken kaskadenartig hintereinander zu schalten, um so in den einzelnen Becken die gewünschten, besonderen Prozeßführungen durchzuführen. Außerdem ist es bekannt, solche Prozeßführungen in einem als Ringkanal ausgebildeten, im Kreislauf durchströmten Becken durchzuführen, in dem verschiedene Zonen erzuegt werden. Im anoxischen Bereich werden dabei Propeller installiert. Diese Becken arbeiten mit einer Strömungsgeschwindigkeit von mindestens 0,3 m pro Sekunde.

Aufgabe der Erfindung ist es dagegen, ein Verfahren anzugeben, bei dem ein optimaler, den jeweiligen, auch variierenden Anforderungen, angepaßter und verbesserter Reinigungsbetrieb, in schwach belasteten Becken nach Erdbeckenbauweise möglich ist.

Gelöst wird diese Aufgabe mit einem Verfahren zur biologischen Reinigung von Abwässern, bei dem zunächst über ein Becken beabstandet über die Beckenfläche Belüfterketten angebracht werden, die jeweils mehrere an den Belüfterketten hängende, bis in kurzem Abstand über dem Beckenboden reichende Bodenbelüfter tragen, wobei die Belüfterketten im Betrieb eine hin- und hergehende Wanderbewegung ausführen, so daß die Bodenbelüfter periodisch über den Beckenboden streichen, bei dem dann zur Belüftung und Umwälzung von Abwasser und Belebtschlamm von der Anzahl der Belüfterketten zu einem Zeitpunkt jeweils nur eine Teilanzahl voll Luft beaufschlagt wird, während die Zufuhr zu den anderen Belüfterketten mehr oder weniger gedrosselt wird, so daß nur in den voll Luft beaufschlagten Bereichen des Beckens eine volle Umwälzung von Abwasser und Belebtschlamm stattfindet und bei dem dann die volle Luftbeaufschlagung in bestimmten Zeitabständen von einer zu einer nächsten Teilanzahl von Belüfterketten in Wellen wandernd vorgenommen wird.

Das erfindungsgemäße Verfahren erzeugt durch die wandernde Beaufschalgung der einzelnen, auch selbst wandernden Belüfterketten eine das Beckendurchlaufende Welle (oder auch mehrere Wellen) intensiver Belüftungsbereiche und erzeugt andererseits dazwischenliegende, wandernde sehr viel schwächer oder gar nicht belüftete Felder. Somit wandern immer wieder Zonen durch das Becken, wobei ein Prozeßschritt, wie er durch den bestimmten Zustand in den wandernden Zonen erreicht wird, immer wieder angeboten wird, was dann in der Summe zu einer totalen Durchführung dieses Prozeßschrittes führt. Somit läßt sich beispielsweise in einem Becken mit einem hohen Wirkungsgrad ein simultaner Denitrifizierungseffekt erzielen, indem man solche, eine Denitrifizierung herbeiführende Zonen immer wieder durch das Becken führt. Durch die überlagerung der Wanderbewegung der Bodenbelüfter einerseits mit der periodischen Luftbeaufschlagung der einzelnen Belüfterketten andererseits ergibt sich in Kombination eine Verfahrensführung, die große verfahrenstechnische Vorteile mit sich bringt. Diese Vorteile liegen u.a. darin, daß die angestrebten Sonderprozeßführungen bei sehr geringen Sauerstoffwerten z.B. 0,3 $O_2$ Milligramm/Liter ab Oberwert durchführen kann. Dies erhöht die Sicherheit im Betrieb der Anlage. Die Erzeugung dieser wandernden Zonen und die damit möglichen Sonderprozeßführungen sind trotz des möglichen niederen $O_2$-Wertes ohne Propeller durchführbar. Es lassen sich auch sehr genau definierte schmale Zonen erzeugen, da die Durchmischung in einem sehr genau definierten vertikalen Bereich, der an jede Stelle des Beckens wandern kann, erfolgt. Eine sich in horizontaler Richtung ausbreitende Durchmischung und Ausweitung erfolgt dagegen kaum. Dies führt zu sehr genau definierten und sich in horizontaler Richtung nur wenig ausweitenden Zonen, die dann durch die Wanderung der Zonen durch das Becken trotzdem an jeder Stelle des Beckens erzeugt werden können. Der Wasserdurchgang erfolgt dabei senkrecht zu den Zonen. Durch die von Zeit zu Zeit erfolgende Wanderbewegung der einzelnen Bodenbelüfter führen diese eine Selbstreinigung durch, so daß auch Schlamm, der sich bei Stillstand der einzelnen Bodenbelüfter evtl. auf diesen Belüftern absetzt, bei der Wanderbewegung der Bodenbelüfter abgespült wird. Trotz dem zweitweise erfolgenden Abschalten der einzelnen Bodenbelüfter kommt es daher auch nicht zu einer endgültigen Verstopfung eines Bodenbelüfters.

Die erfindungsgemäße Kombination, einerseits wandernde Belüfterketten mit an ihnen hängenden Bodenbelüftern zur Belüftung und Umwälzung einzusetzen und andererseits mit nur einer Teilanzahl der Belüfterketten mit voller Luftbeaufschlagung zu arbeiten, ermöglicht durch die entsprechende Wahl der Zeitabstände der überlagerten Wanderbewegungen und der eingetragenen Luftmenge eine variable Prozeßführung.

Eine so betriebene Anlage kann z.B. in Zeiten niederer Belastung, beispielsweise bei noch nicht ganz fertigen Kanalnetzen, bei wachsenden Gemeinden, während der Nachtstunden oder auch während der Ferienzeit immer einen verfahrenstechnisch optimal angepaßten Betrieb gewährleisten.

Das erfindungsgemäße Verfahren macht ebenfalls Gebrauch von der Erkenntnis, daß man über gewisse Zeiträume ein teilweises Absinken des Belebtschlammes oder auch eine Belebtschlammablagerung in Zonen des Beckenbodens zulassen darf bzw. wünscht, wobei in diesen Zonen nahezu keine Sauerstoffversorgung erfolgt. Es hat sich auch herausgestellt, daß, solange gewissse Zeiträume eingehalten werden, diese Zonen, obwohl sie an sich nicht mit Sauerstoff versorgt werden, nicht umkippen, d.h. Schaden nehmen oder gar absterben; sie werden im Gegenteil zu höherer Reinigungsleistung d.h. zu höherem Nährstoffabbau angeregt. Da die wandernden Bodenbelüfter periodisch über den Beckenboden streichen, ist garantiert, daß der gesamte Beckenboden in gewissen Zeiträumen überstrichen wird, so daß auch abgesetzter Schlamm immer wieder an jeder Stelle des Beckenbodens angehoben wird und in eine Umwählzbewegung mit einbezogen wird. Ein Absterben in irgendeinem Bereich des Beckenbodens, wie das bei fest installierten Bodenbelüftern geschieht, kann daher bei dem erfindungsgemäßen Verfahren nicht auftreten. Gegenüber den mit fest installierten Bodenbelüftern arbeitenden Anlagen ergibt sich auch der weitere wesentliche Vorteil, daß man Prozesse durchführen kann, die niedrige Sauerstoffgehalte voraussetzen. Dies ist mit Anlagen, die allein, mit fest installierten Bodenbelüftern arbeiten, nicht möglich, weil diese Anlagen einen sehr viel größeren Grundenergieeintrag zur Umwälzung erfordern, so daß sich die für diese Prozesse erforderlichen niedrigen Sauerstoffgehalte nicht mehr einhalten lassen.

Die Beaufschlagung der einzelnen wandernden Belüfterketten kann je nach Anforderung optimal angepaßt werden und beispielsweise so erfolgen, daß zu einem bestimmten Zeitpunkt jeweils zwei, durch mindestens eine unbelüftete oder schwach belüftete Belüfterkette getrennte Belüfterketten voll beaufschlagt werden und daß dann jeweils nach bestimmten Zeitabständen die in derselben Richtung angrenzenden Belüfterketten beaufschlagt werden. Wenn beispielsweise in einem Becken acht nebeneinander verlaufende Belüfterketten angeordnet sind, so wird beim Betrieb mit einer Volluftbeaufschlagung der ersten und fünften Belüfterkette begonnen, während alle übrigen Belüfterketten nur schwach oder überhaupt nicht belüftet werden. Nach einer gewissen Zeitspanne wird dann die zweite und sechste Belüfterkette voll luftbeaufschlagt, während die übrigen Belüfterketten, insbesondere die erste und die vierte, dann auf Teilluftbeaufschlagung umgeschaltet oder ganz abgeschaltet werden. Dies setzt sich fort, bis schleißlich die vierte und die achte Belüfterkette an den jeweils von ihnen beeinflußten Stellen intensiv belüftete Belüftungsbereiche schaffen. Danach wird wieder mit der ersten und vierten Belüfterkette begonnen usw.

Je nach Anzahl der vorhandenen wandernden Belüfterketten nach Abmessungen der Becken, nach Belastung oder bei besonders schwerem Schlamm können beispielsweise zu einem Zeitpunkt auch immer zwei nebeneinanderliegende Belüfterketten (Belüfterkettenpaar) beaufschlagt werden, sowie ein weiteres Belüfterkettenpaar, welches von dem ersten Belüfterkettenpaar durch mehrere unbeaufschlagte oder schwach beaufschlagte Belüfterketten getrennt ist. Das Wandern der Belüftungszonen, welche der Wanderbewegung der Einzelketten überlagert ist, wird dann so erzeugt, daß jeweils eine Belüfterkette jedes Paares abgeschaltet und eine der noch vollbeaufschlagten Belüfterkette auf der anderen Seite benachbarte Belüfterkette hinzugeschaltet wird.

Auch ist es denkbar, nur einen Teilbereich des Beckens in "wandernder Weise" zu beaufschlagen, um die anderen Teile immer oder vorübergehend mit "Dauerbeaufschlagung" zu betreiben. Auch können einzelne Teile des Beckens mit verschiedener Frequenz oder verschiedener Intensität beaufschlagt werden. Dies kann z.B. sinnvoll sein, wenn man den Einlaufbereich des Beckens immer oder zeitweilig voll durchmischen will, während der Rest des Beckens einer schnellaufenden Wellenbeaufschlagung unterliegt. Zielt man wiederum auf einen gleichmäßigen Sauerstoffgehalt beim bzw. im Auslauf des Beckens ab, so wird man die diesen Bereich zuzurechenden Belüfter einer totalen oder zeitweisen Dauerbeaufschlagung unterziehen, während wiederum der Rest des Beckens einem oder mehreren Wechselprogrammen unterliegt.

Dem Fachmann ist klar, daß das neue Verfahren mit den an sich wandernden aber darüber hinaus wellenartig beaufschlagten Belüfterketten über die beschriebenen Beispiele hinaus, gerade auch bezüglich der biologischen Prozeßführung einen gewaltigen Fortschritt in Richtung Steuerbarkeit, Anpassung und Feinregelung bewirkt, so daß sich hieraus ganz neue Prozeßführungen im Becken ergeben, die mit der bisherigen Technik unter Verwendung von starren Bodenbelüftern nicht realisierbar waren. Dies bedeutet, daß auf der Basis des gesicherten Belebtschlammhaushaltes Verfahrensvarianten möglich sind, wie sie nur mit Anlagen des hier betroffenen niedrigen Energieniveaus durchgeführt werden können.

Der Zeitabstand, mit dem die wandernden Belüfterketten beaufschlagt werden und damit die Wandergeschwindigkeit, mit der die intensiven Belüftungsbereiche durch das Becken wandern, wird bevorzugt in Abhängigkeit vom Sauerstoffgehalt, der Belastung und der Schlammdaten gesteuert. Die Minimalgeschwindigkeit muß als Minimum jedoch immer noch so groß sein, daß die Belebtschlammpartikel nach dem Absetzen auf dem Boden nicht absterben bzw. geschädigt werden. Damit läßt sich auch eine optimale Anpassung an den jeweiligen Schlammindex, der angibt, wie schwer der Schlamm ist, erzielen und es kann jeweils die davon abhängige erforderliche Mindestenergie eingetragen werden.

Es ist außerdem vorteilhaft, die Anzahl der vollbeaufschlagten wandernden Belüfterketten in Abhängigkeit vom Sauerstoffgehalt, der Belastung und der Schlammdaten des Beckens zu steuern. Die Frequenz der Vollbeaufschlagung der Belüfterketten ist, wenn sie z.B. in Abhängigkeit von der Belastung gesteuert wird, damit immer in optimaler Weise mit geringstem Energieaufwand auf den Sauerstoffbedarf abstimmbar. Es hat sich herausgestellt, daß in den meisten Fällen eine derartige Wellenwandergeschwindigkeit ausreicht, bei der jede Belüftungskette etwa ein- bis zehnmal pro Stunde voll beaufschlagt wird.

Eine wietere sehr vorteilhafte Ausgestaltung des Verfahrens sieht vor, daß die Zeitabstände der vollen Luftbeaufschlagung und/oder die Anzahl der voll luftbeaufschlagten Belüfterketten automatisch in Abhängigkeit von für den erforderlichen Sauerstoffeintrag maßgeblichen Parametern wie momentane Belastung und Schlammenge geregelt werden. Zur Durchführung eines solchen Regelkreislaufs im laufenden Betrieb kann man verschiedene Parameter messen, die für den erforderlichen Sauerstoffeintrag maßgeblich sind. So kann beispielsweise die Zulaufmenge ($m^3$/Stunde) oder die Zulauftemperatur T im Becken mit Hilfe geeigneter Meßgeräte erfaßt werden. Es könnten beispielsweise auch PH-Wert-Schwankungen im Einlauf oder stark sauerstoffzehrende Komponenten meßtechnisch erfaßt werden. Auch ist es denkbar, beispielsweise die Trübe des Wassers zu messen. Diese Meßergebnisse können dann an eine zentrale Rechnereinheit, beispielsweise einen Computer, gegeben und von diesem entsprechend ausgewertet werden, wobei dann automatisch die Beaufschlagung der einzelnen Belüfterketten abhängig von diesen Meßergebnissen, ggf. einem abwasser- oder anlagenspezifischen "Programm" folgend vorgenommen wird. Je nach den erfaßten Meßwerten kann dann beispielswiese örtlich mehr Sauerstoff z.B. in der Einlaufzone eingetragen werden oder es können die Sauerstoffeintragsquellen schneller durch das Becken geführt werden. All dies erlaubt einen individuellen jeweils optimalen Betrieb der Anlage, bei dem sich aufgrund der besonderen Verfahrensführung eine jeweils optimale Reinigung erreichen läßt.

Eine weitere sehr vorteilhafte Weiterbildung des Verfahrens sieht vor, daß die Sauerstoffmenge, die jeweils über die voll mit Luft beaufschlagte Teilanzahl von wandernden Belüfterketten eingetragen wird, größer ist als die Eintragungsmenge, die sich für diese Teilanzahl ergeben würde, wenn alle Belüfterketten voll Luft beaufschlagt wären. Dies bedeuetet, daß nach dem erfindungsgemäßen Verfahren die pro Belüfterkette ausströmende Luftmenge größer sein kann als bei einer Anlage, bei der alle Belüfterketten gleichzeitig in Betrieb sind. Angenommen, es seien bei einer herkömmlichen Anlage zehn Belüfterketten vorhanden, die alle gleichzeitig beaufschlagt sind. Dann wird dem gegenüber bei dem erfindungsgemäßen Verfahren zunächst einmal die Beaufschlagung auf beispielsweise insgesamt 50% reduziert. Die Luftmenge wird aber nicht auf fünf Belüfterketten aufgeteilt, sondern nur beispielsweise auf zwei Ketten, so daß dort der Lufteintrag wesentlich erhöht ist. Im Extremfall wird sogar nur eine Belüfterkette, beispielsweise für kurze Zeit mit dieser Menge beaufschlagt. Dieser konzentrierte Lufteintrag führt zu vielen Vorteilen. Einmal können damit z.B. in einem Teich vorhandene Schlamminseln örtlich aufgelöst werden. So kann z.B. bei zehn vorhandenen Belüfterketten auf eine Belüfterkette die zehnfache Eintragungsmenge konzentriert werden, die auch tatsächlich durch die Wanderbewegung der Einzelkette und das nacheinander Umschalten auf jede einzelne Kette jede Bodenstelle erreicht. Zum anderen führt dies jedoch dazu, daß die einzelnen Bodenbelüfter aufgrund des hohen spezifischen von Zeit zu Zeit erfolgenden Lufteintrags in Kombination mit der Reinigungswirkung der Wanderbewegung von Verstopfungen freigehalten werden, weil sie durch den erhöhten Luftaustritt immer wieder "saubergeblasen" werden bzw. sehr stark wandern und damit stärkerer Anströmung ausgesetzt sind. Bei den wandernden Belüfterketten führt dieser örtliche verstärkte Lufteintrag der einzelnen Belüfterketten zu relativ großen Amplituden und daher zu einer intensiven Umwälzung des Schlamms.

Im Fall extrem intensiver Bodenablagerung z.B. nach längerem Stromausfall oder sonstigem Stillstand (Kampagnebetrieb) oder nach übermäßiger Fäkalschlammzugabe o.ä. kann man auch das gesamte Luftpotential der Anlage auf einige wenige wandernde Belüfterreihen konzentrieren, so daß diese übermäßig mit Luft beaufschlagt werden. Nun wandert quasi eine "Umwälz- und Aufwühlwelle" durch das Becken, die durch die gleichzeitige Wanderbewegung der Ketten mit der Zeit garantiert den gesamten Bodenbereich erfaßt und somit die Anlage wieder ihrem Normalzustand zuführt.

Eine Vorrichtung zur Durchführung des Belebtverfahrens zeichnet sich dadurch aus, daß in jeder Luftversorgungsleitung einer wandernden Belüfterkette ein von einer zentralen Steuereinheit ansteuerbares Drosselventil angeordnet ist, welches bei Ansteuerung die Luftversorgung zu der zugeordneten Luftversorgungsleitung drosselt oder sperrt. Ein derartig jeder Luftversorgungsleitung zugeordnetes Drosselventil erlaubt es, individuell die einzelnen Luftversorgungsleitungen der wandernden Belüfterketten zu beaufschlagen und diese Leitungen zu sperren oder zu drosseln. Dies schafft die Voraussetzung für eine individuelle Regelung, wobei die Regelung z.B. über eine zentrale Steuereinheit vorgenommen werden kann, an der sowohl die Zeitabstände als auch die Anzahl der zur gleichen Zeit vollbeaufschlagten wandernden Belüfterketten variabel einstellbar sind. Die damit erhaltene große Flexibilität hinsichtlich der Frequenz und Menge, mit der die Luft eingetragen wird, ermöglicht bei geringstmöglichem Energieaufwand eine flexible Anpassung an die unterschiedlichsten Belastungen und eine hervorragende Regelbarkeit im Sinne verschiedenster verfahrenstechnischer Sonderzustände und Varianten insbesondere des Belebtverfahrens.

Unter Regelbarkeit wird hier insbesondere auch die für die angesprochenen verfahrenstechnischen Sonderzustände erforderliche Feinregulierung hervorgehoben. Eine solche Feinregulierung ist mit fest installierten Bodenbelüftern schon prinzipiell deshalb nicht möglich, weil der dazu erforderliche gleichmäßige Vordruck nicht eingehalten werden kann. Bei einer Kläranlage schwankt immer das Wasserniveau und der Boden weist Unebenheiten auf, die auch erste durch spätere Setzungen ergeben können. Für fest am Boden installierte Bodenbelüfter schwankt damit aber auch der Vordruck, der je nach Wasserniveau bzw. Bodensituation unterschiedlich groß ist. Um hier mit einem immer gleichmäßigen Vordruck arbeiten zu können, wäre es erforderlich, z.B. jeder Belüfterreihe einen eigenen Verdichter zuzuordnen, was aber unwirtschaftlich ist. Dem gegenüber werden durch die schwimmenden und wandernden Belüfterketten die Bodenbelüfter immer auf demselben Punktniveau unabhängig vom Wasserniveau gehalten, da der Abstand zur Wasseroberfläche immer konstant bleibt. Dies schafft in überraschend einfacher Weise die Voraussetzungen eine Feinregulierung und damit die verfahrenstechnischen Sonderzustände herbeiführen zu können.

Bei einer konkreten Ausgestaltung wird jede Luftversorgungsleitung von einer Schlauchleitung gebildet und es ist das Drosselventil als Quetschventil ausgebildet. Das Quetschventil kann beispielsweise mittels eines druckluftbetätigten Kolbens beaufschlagt werden. Die einzelnen Quetschventile können dann z.B. über eine zentrale Druckluftleitung und entsprechende Ventile angesteuert werden. Durch verschiedene Beaufschlagung verengt das Quetschventil den Strömungsquerschnitt in der Schlauchleitung, so daß in äußerst einfacher Weise die gewünschte Drosselung der Luftzuführungsmenge erreicht wird.

Die Drosselventile lassen sich auch noch im Nachhinein an bereits bestehenden Anlagen zusammen mit der Steuereinheit anbringen, so daß auch bereits im Betrieb befindliche Anlagen auf das erfindungsgemäße Verfahren in einfacher Weise umgerüstet werden können.

Es kann günstig sein, die Luftzuführung zu den nicht vollbeaufschlagten Belüfterketten niemals ganz abzustellen, um hierdurch zusätzlich noch einer Verstopfung der Bodenbelüfter vorzubeugten. Wenn eine geringe Luftbeaufschlagung der nicht vollbeaufschlagten Belüfterketten aufrechterhalten wird, halten die ausströmenden Luftblasen die Belüfterkerzen brei von Verstopfungen. Für diesen Fall kann es dann von Vorteil sein, wenn am Angriffspunkt des Quetschventils im Inneren der Schlauchleitung ein starres Rohr von kleinem Querschnitt eingebaut ist, so daß das Quetschventil eine Schlauchleitung dann bedingt durch das starre Rohr, niemals vollständig absperrt.

Das erfindungsgemäße Verfahren läßt sich bevorzugt für sogenannte Belebtanlagen aber auch für sogenannte Teichanlagen oder auch für die Belüftung von Seen oder dergl. mit wandernden schwimmend aufgehängten Bleüfterketten anwenden.

Im folgenden wird die Erfindung anhand der Zeichnung weiter erläutert und beschrieben.

Figur 1 zeigt in schematischer Darstellung eine Draufsicht auf ein mit wandernden Belüfterketten versehenes Abwasserbecken,

Figur 2 zeigt eine Seitenansicht eines schwimmend aufgehängten Bodenbelüfters,

Figuren 3A bis 3C zeigen schematisch die Beaufschlagung der einzelnen wandernden Belüfterketten zu jeweils verschiedenen Zeitpunkten,

Figur 4 zeigt schematisch in einer Draufsicht die Einrichtungen zur Steuerung der Luftbeaufschlagung der einzelnen wandernden Belüfterketten und

Figur 5 zeigt in einem Längsschnitt ein Ausführungsbeispiel eines Quetschventils und

Figur 6 zeigt ein Gesamtschema des Verfahrens.

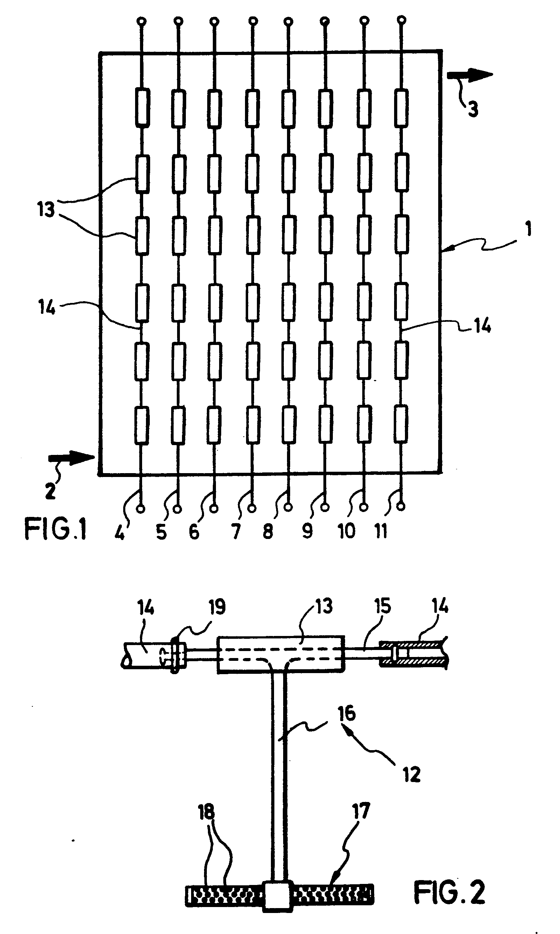

In der Figur 1 ist in Draufsicht ein einzelnes Becken einer Abwasserreinigungsanlage dargestellt und insgesamt mit 1 bezeichnet. Eine komplette Anlage kann mehrere derartige Becken umfassen, sowie weitere Schlammabsetz- und -stapelbecken. Über den Zulauf 2 wird das zu reinigende Abwasser in das Becken 1 eingespeist und verläßt dann am diagonal gegenüberliegenden Ablauf 3 das Becken. Es kann dann in ein weiteres Belebtbecken oder auch in das Schlammabsetz- oder -stapelbecken geführt werden. Darüber hinaus können Schlammrückführleitungen vorgesehen werden, wobei dies jeweils von der speziellen Art der Anlage abhängt, in der das Verfahren durchgeführt wird. Da die Erfindung gleichermaßen für Teichanlagen, die ohne Schlammrückführung arbeiten, wie auch für Belebtanlagen einsetzbar ist, die mit Schlammrückführung arbeiten, sind im vorliegenden Ausführungsbeispiel Details der einzelnen Anlagen weggelassen.

Um das Abwasser reinigen zu können, ist es notwendig, das Abwasser mit dem belebten Schlamm an jeder Stelle des Beckens zu durchmischen und unter Sauerstoffeintragung mit dem Schmutzwasser in Berührung zu bringen.

Zu diesem Zweck sind in dem gezeigten Ausführungsbeispiel über das Becken acht schwimmend aufgehängte wandernde Belüfterketten 4 bis 11 gespannt, die jeweils einzelne beabstandete Bodenbelüfter 12 (vgl. Figur 2) tragen. Die einzelnen Belüfterketten umfassen jeweils flexible Schlauchleitungen 14, die im Bereich jedes schwimmenden Bodenbelüfters 12 unterbrochen werden. Die Verbindung mit den Bodenbelüftern wird von einem waagerechten oberen Abschnitt 15 des Verbindungsrohres 16 hergestellt. Dieser Abschnitt ist mit den beiden gegenüberliegenden Enden in die beiden Schlauchenden zweier benachbarter Abschnitte der Luftversorgungsleitung 14 eingesteckt. Am unteren Ende des Verbindungsrohres 16 ist ein zum Träger paralleles Verteilerrohr 17 befestigt, das an seinem Umfang zahlreiche Luftöffnungen 18 besitzt. Durch die Luftversorgungsleitung 14 und das Verbindungsrohr 16 kann das Verteilerrohr mit Druckluft gespeist werden, die dann durch die Luftöffnungen 18 ausströmt. Bei diesem Ausführungsbeispiel ist im Bereich oberhalb eines jeden Bodenbelüfters 12 noch ein Schwimmer 13 vorgesehen, der sich in der Längsträgerachse erstreckt und für die schwimmende Lagerung der Bodenbelüfter 12 sorgen soll. Die Anschlüsse zwischen den Schläuchen und dem Bodenbelüfter sind mit üblichen Befestigungsmitteln, wie z.B. mit Spannlaschen 19 zusammengehalten.

Bei anderen, nicht dargestellten Ausführungsbeispielen können auch anstelle des starren Zuleitungsrohres 16 flexible Schlauchzuleitungen die jeweiligen Verteilerrohre 17 an die Luftversorgungsleitung 14 jeweils anschließen. Die Verwendung von mehreren flexiblen Schlauchzuleitungen, beispielsweise an jedem Ende eines jeden Schwimmers 13 befestigt, führt zu einer erhöhten Stabilität, was insbesondere im Zusammenhang mit dem erfindungsgemäßen Verfahren von Vorteil ist, wenn der individuelle Lufteintrag über die einzelnen wandernden Bodenbelüfter größer ist als bei einer gleichmäßigen Eintragung über viele Bodenbelüfter. Auch ist es möglich, parallel zu der Luftversorgungsleitung 14 ein Tragseil jeweils über die Becken zu spannen, an dem dann die Luftversorgungsleitungsschläuche 14 geeignet gehalten bzw. befestigt werden.

Die einzelnen Belüfterketten 4 bis 11 werden lose schwimmend über das Becken 1 gespannt, so daß bei Luftbeaufschlagung eine Wanderbewegung in der Art einer seitlichen Auslenkung der Belüfterketten stattfindet. Die schwimmenden Belüfterketten führen dann die Bodenbelüfter 12 in einer hin- und hergehenden Bewegung über den Beckenboden, vorzugsweise in einem sehr kurzen Abstand zum Beckenboden, beispielsweise zwischen 10 und 30 cm. Durch diese hin- und hergehende Bewegung der Bodenbelüfter wird eine für große Bereiche wirkende Sauerstoffeintragung erreicht und es wird insbesondere sichergestellt, daß die bodennah angeordneten Bodenbelüfter Belebtschlamm, der zum Teil gesunken ist oder der sich auf dem Beckenboden abgesetzt hat, wieder aufwirbeln und erneut in Umlauf bringen.

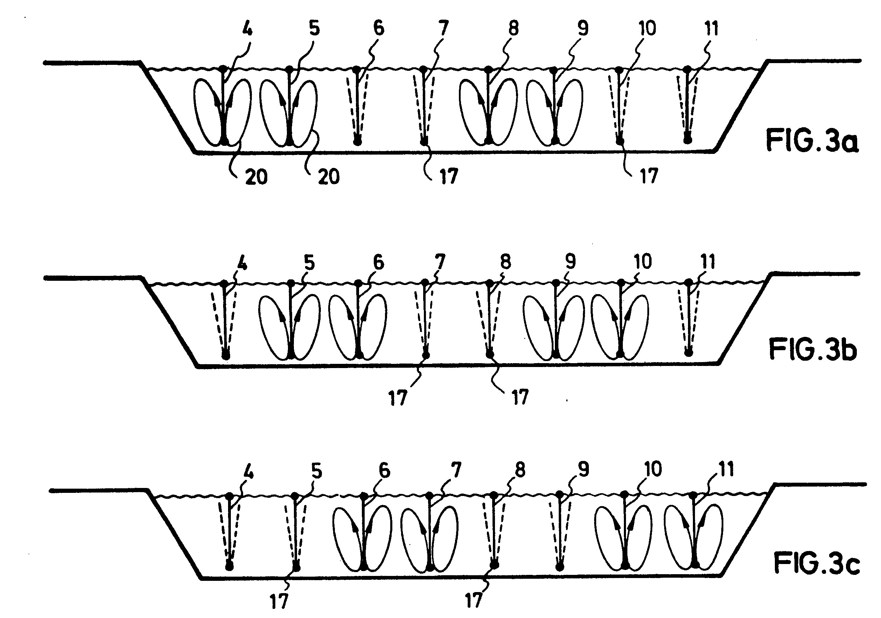

In den Figuren 3a bis 3c ist nun in einem Querschnitt durch das in Figur 1 dargestellte Becken die Anlage schematisch im Betrieb gezeigt. Zu einem ersten Zeitpunkt ergibt sich dabei eine Situation, wie das in Figur 3a dargestellt ist. Zu diesem Zeitpunkt sind, wie durch die durchgezogenen Umwälzpfeile 20 schematisch angedeutet, die Belüfterketten 4 und 5 sowie 8 und 9 volluftbeaufschlagt. Zu diesem Zeitpunkt wird also lediglich in einem Teilvolumen des Beckens voll belüftet, während in einem anderen Teilvolumen, in dem die Belüfterketten 6, 7 und 10, 11 wirken, nur ein unwesentlicher Sauerstoffeintrag und eine geringe Strömung stattfindet (gestrichelte Linien).

Nach einer bestimmten Zeitspanne, die z.B. von der Belastung der Anlage abhängt, wird z. die vierte und die achte Belüfterkette abgeschaltet und stattdessen die sechste und zehnte Belüfterkette zugeschaltet. Die Belüfterketten 5 und 9 sind nach wie vor voll mit Luft beaufschlagt. Durch diese Verschiebung nach rechts wandert somit die Zone, in der eine intensive Sauerstoffeintragung stattfindet, im Bild nach rechts. Zu einem wiederum späteren Zeitpunkt (vgl. Figur 3C) wird dann die fünfte und neunte Belüfterkette abgeschaltet und die siebte und elfte Belüfterkette hinzugeschaltet. Bei diesem gezeigten Ausführungsbeispiel werden jeweils also immer zwei beabstandete Belüfterkettenpaare beaufschlagt. Die Zuschaltung einer neuen Belüfterkette erfolgt jeweils zur selben Richtung eines Belüfterkettenpaares hin, in dem gezeigten Ausführungsspiel jeweils durch Anschalten einer rechts neben einem Belüfterkettenpaar sich befindenden Belüfterkette.

Auf diese Art und Weise wird eine das Becken, bei dem Beispiel von links nach rechts, durchlaufende Welle hohen Sauerstoffeintrags und/oder hoher Durchmischung erzuegt. Nachdem die Anlage eine Zeit lang in der in Figur 3C gezeigten Weise betrieben worden ist, wird dann wieder mit der Betriebsweise wie in Figur 3A dargestellt begonnen usw.. Wesentlich ist, daß diese Lufteintragswelle bei allen Schaltmöglichkeiten auf die an sich wandernden Belüfterketten "aufmoduliert" wird, denn nur auf der Basis der durch das Wandern der schwimmend aufgehängten Bodenbelüfter erreichten Grundeffekte, insbesondere bezügl. des Belebtschlammes können die besonderen beschriebenen Effekte der Erfindung überhaupt erst wirksam erreicht werden.

Es ist klar, daß je nach Belastung des Beckens bzw. je nach gewünschtem verfahrenstechnischemn Effekt mit unterschiedlichen Zeitabständen die Zu- und Abschaltung erfolgen kann. Es ist ebenfalls klar, daß auch anstelle der gleichzeitigen Beaufschlagung von zwei Belüfterkettenpaaren jeweils nur zwei einzelne Belüfterketten beaufschlagt werden können, beispielsweise zunächst die Belüfterketten 4 und 8, dann die Belüfterketten 5 und 9, dann die Belüfterketten 6 und 10 und schließlich die Belüfterketten 7 und 11.

Bei Anlagen, die mit weniger Belüfterketten, beispielsweise nur mit drei Belüfterketten, arbeiten, kann es auch ausreichend sein jeweils immer nur eine Belüfterkette voll mit Druckluft zu beaufschlagen.

Es auch klar, daß ganzeZonen des Beckens in anderem Rhythmus oder starr beaufschlagt werden können.

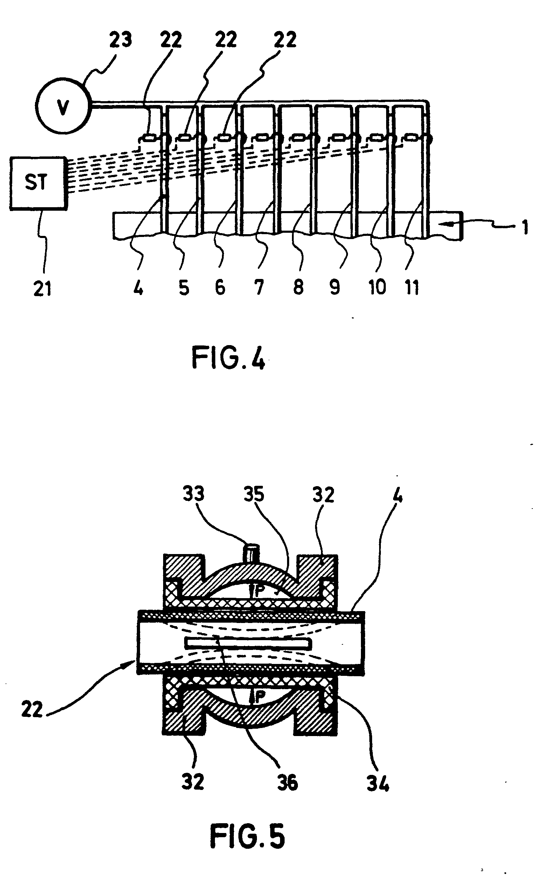

Die entsprechende Steuerung der Luftbeaufschlagung ist schematisch in Figur 4 gezeigt. Dort ist eine zentrale Steuereinheit 21 vorgesehen, die jeweils den einzelnen Belüfterketten 4 bis 11 zugeordnete Quetschventile 22 beaufschlagen. Die Quetschventile wirken jeweils auf die Enden der Schlauchleitungen 4 bis 11 und verringern bei Beaufschlagung ihren Durchtrittsquerschnitt. Die nicht gedrosselten Ventile beaufschlagen die Schlauchleitungen dann jeweils mit der vollen Leistung, die die Druckluftversorgungsquelle 23 zur Verfügung stellt. Die Quetschventile können z.B. ebenfalls mit Druckluft beaufschlagt und betätigt werden. Es können auch ebenso elektrisch beaufschlagbare Ventile 22 und eine zentrale Steuerdruckluftstation Verwendung finden.

Ein konkretes Ausführungsbeispiel eines Quetschventils, wie es im Zusammenhang mit der Erfindung verwendet werden kann, ist in Figur 5 dargestellt. Das Quetschventil ist insgesamt mit 22 bezeichnet und besteht im wesentlichen aus einer rohrförmigen Gummimanschette 34, deren Innendurchmesser etwa dem Außendurchmesser der Schlauchleitung 4 entspricht, so daß die Manschette passend über die Schlauchleitung 4 geschoben werden kann. Über die Gummimanschette 34 wird ein Ringflansch 32 so befestigt, daß ein umlaufender Druckluftraum 35 entsteht. Der Flansch 32 weist einen Druckluftanschluß 33 auf. Nachdem der Flansch 32 somit über die Gummimanschette 34 dichtend aufgesetzt wird, kann durch Druckluftzuspeisung über den Druckluftanschluß 33 ein Druck P in dem Raum 35 erzeugt werden, was zur Folge hat, daß sich die Gummimanschette 34 in Richtung der eingezeichneten Pfeile P bewegt, was zu einem Zusammenquetschen des Schlauches 4 führt.

Im Inneren der Schlauchleitung 4 ist über nicht näher gezeigte Distanzhalter ein Rohr 36 angeordnet, das einen minimalen Luftdurchtritt auch dann ermöglicht, wenn die Schlauchleitung 4 in die extreme Quetschstellung, wie sie gestrichelt in der Figur 5 dargestellt ist, zusammengedrückt wurde.

Je nachdem, wie groß der Druck in dem Raum 35 erzeugt wird, lassen sich unterschiedliche Durchlaßquerschnitte der Schlauchleitungen einstellen.

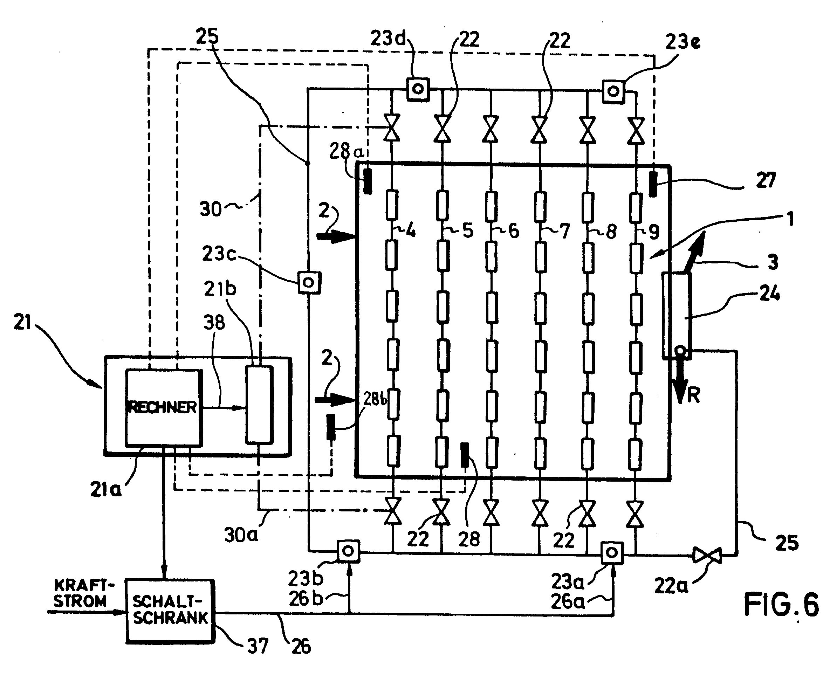

In Figur 6 ist in einer Schemazeichnung eine Anlage schematisch gezeigt, die nach dem erfindungsgemäßen Verfahren betrieben werden kann.

Zu erkennen ist wiederum das Becken 1 sowie einzelne über das Becken verteilte Belüfterketten 4 bis 9.

Jeder wandernden Belüfterkette ist an beiden Enden jeweils ein Quetschventil 22 zugeordnet, das den in Figur 5 gezeigten Aufbau haben kann. Auf der Auslaufseite des Beckens 1 befindet sich eine Schlammsammelrinne 24, von der weg der Auslaß 3 führt. Über die Rücklaufleitung R kann aus der Schlammsammelrinne 24 Belebtschlamm zur Einlaufseite 2 je nach Bedarf gefördert werden, um das ankommende Schmutzwasser bereits im Einlaufbereich 2 mit Belebtschlamm zu impfen.

Der Rücklauf von Belebtschlamm und von Rücklaufwasser kann in Abhängigkeit der Steuerung/Regelung der Luftbeaufschlagung der Belüfterketten gesteuert oder geregelt werden.

Die einzelnen wandernden Belüfterketten 4 bis 9 stehen über eine Luftdruckringleitung 25 und die einzelnen Quetschventile 22 über die Schlauchleitung 25 in Verbindung miteinander. In der Schlauchleitung 25 sind verschiedene Verdichter 23a bis 23e angeordnet. Diese Luftverdichter sorgen für den gewünschten Luftdruck und werden hierzu über eine Leitung 26, 26a, 26b von einem Schaltschrank 37 mit dem zum Betrieb der Verdichter erforderlichen Strom versorgt.

Die Anschlußleitungen zu den Verdichtern 23c, 23d und 23e sind der Übersichtlichkeit halber weggelassen. Die Steuerung der Anlage erfolgt über die Steuereinheit 21, welche einen Rechner 21a sowie eine Verteilereinheit 21b aufweist, die abhängig von den vom Rechner 21a empfangenen Schaltbefehle über individuelle Leitungen 30 jedes einzelne Ventil 22 ansteuern kann. Es sind nur zwei Leitungen 30 gezeigt. Jedoch führen zu jedem Quetschventil 22 solche separaten Luftdruckleitungen, um die einzelnen Quetschventile 22 individuell schalten zu können.

Im Becken sind desweiteren verschiedene Meßsonden 27, 28 und 28a, 28b angeordnet. Beispielsweise kann mit den Meßsonden 27 der Sauerstoffgehalt im Becken laufend gemessen werden, während beispielsweise mit der Meßsonde 28 die Trübung des Wasser erfaßt wird. Die Meßsonde 29, die im Einlauf 2 angeordnet ist, mißt die Schmutzwasserzulaufmenge.

Alle diese von diesen Sonden erfaßten Signale werden an den Rechner 21a weitergegeben und von diesem verarbeitet. Der Rechner gibt dann über die Befehlsleitung 38 die entsprechenden Signale an die Verteilereinheit 21b weiter, die dann entsprechend den Signalen individuell die Ventile 22 mit Druckluft beaufschlagt.

Natürlich kann über den Rechner die Anlage auch nach festen Programmen betrieben werden.

Es hat sich gezeigt, daß mit dem erfindungsgemäßen Verfahren bzw. der erfindungsgemäßen Vorrichtung insbesondere auch reine Belebungsanlagen mit äußerst wenig Energie im Vergleich zu anderen Anlagen solcher Art bertrieben werden können, wobei insbesondere bei schwach belasteten Anlagen die Vorzüge der Erfindung zum Tragen kommen. Durch die erfindungsgemäßen wandernden "Oxidationswellen" und die Überlagerung mit den Wanderbewegungen der einzelnen Belüfterketten läßt sich eine hohe Flexibilität und Anpassung an die unterschiedlichsten Belastungswerte und Verfahrenssituationen erreichen, wobei die Anlage immer wirtschaftlich betrieben werden kann. Typische Wellenlaufgeschwindigkeiten der Oxidationswellen, die im Vergleich zu den schwächer belüfteten oder nicht belüfteten Bereichen für einen Sauerstoffeintrag im Verhältnis 5:1 oder gar 10:1 sorgen, liegen bei ca. 0,01 bis 0,06 m pro Sekunde. Der spezifische Lufteintrag in den intensiv belüfteten Bereichen kann bei 0,3 bis 1 m³ Luft pro m³ Wasser und Stunde betragen, während in den schwach belüfteten Bereichen, wie erwähnt, die Belüftung um einen Faktor 5 bis 10 niedriger liegen kann.

Da sich herausgestellt hat, daß der einmal aufgewirbelte Schlamm nur äußerst langsam absinkt (typische Sinkgeschwindigkeiten liegen bei 0,0005 bis 0,003 m pro Sekunde), braucht der Schlamm relativ lange, bis er sich am Boden abgesetzt hat. Wenn der Bodenbereich von den jeweiligen Bodenbelüftern dann unter intensiver Sauerstoffeintragung mit einer Frequenz von ein- bis sechsmal pro Stunde überstrichen wird, reicht dies aus um den Belebtschlamm am Leben zu halten, so daß sich keine schädigenden "anaeroben" Zonen im gesamten Becken ergeben, ohne daß dies anoxische Zonen ausschließt. Die Anlage kann trotzdem insbesondere als geregelte gut beherrschbare Belebtanlage betrieben werden mit dem größen Vorteil variabler Prozeßführung und verbesserter Reinigungswirkung, wobei für die Umwälzung mit Werten bis weit unter 3 Watt pro m³—der unterste Wert für Belüfterketten gleichmäßiger Luftbeaufschlagung——Beckenvolumen erreicht werden, was besonders überraschend ist, wenn man bedenkt, daß etwa die reine Oberflächenbelüftung und fest am Boden installierte Belüftungen Werte um 10 W/m³ allein für die Umwälzung benötigt.

Durch "Modulierung" der Grundbewegung der in schwimmenden Ketten zusammengefaßten vom Grund des Beckens her wirkenden Bodenbelüfter mit den vorangehend beschriebenen wellenartig wandernden oder auch an Zonen gebundenen verschiedenen Beaufschlagungsvarianten werden aber vor allem auf einfachste und energiesparendste Weise Möglichkeiten zur weitergehenden Abwasserreinigung—d.h. der simultanen (in einem Becken) Stickstoff- und Phosphatelemination durch den Belebtschlamm—geschaffen, die man in einfachen Erdbecken niemals erwartet hat und die auch derzeit noch von weiten Kreisen der Fachwelt für nicht möglich gehalten werden.

**Patentansprüche**

1. Verfahren zur biologischen Reinigung von Abwässern, in schwachbelasteten Becken nach Endbeckenbauweise bei dem zunächst über ein Becken beabstandet über die Beckenfläche Belüfterketten angebracht werden, die jeweils mehrere an den Belüfterketten hängende, bis in kurzem Abstand über dem Beckenboden reichende Bodenbelüfter tragen, wobei die Belüfterketten im Betrieb eine hin- und hergehende Wanderbewegung ausführen, so daß die Bodenbelüfter periodisch den Beckenboden überstreichen, dadurch gekennzeichnet, daß zur Belüftung und Umwälzung von Abwasser und Belebtschlamm von der Anzahl der Belüfterketten zu einem Zeitpunkt jeweils nur eine Teilanzahl voll luftbeaufschlagt wird, während die Zufuhr zu den anderen Belüfterketten mehr oder weniger gedrosselt wird, so daß nur in den voll Luftbeaufschlagten Bereichen des Beckens eine volle Umwälzung von Abwasser und Belebtschlamm stattfindet und bei dem dann die volle luftbeaufschlagung in bestimmten Zeitabständen von einer zu einer nächsten Teilanzahl von Belüfterketten in Wellen wandernd vorgenommen wird.

2. Verfahren nach Anspruch 1, dadurch gekennzeichnet, daß zu einem bestimmten Zeitpunkt jeweils zwei, durch mindestens eine unbelüftete bzw. schwach belüftete Belüfterkette getrennte Belüfterketten vollbeaufschalgt werden und daß dann jeweils nach den bestimmten Zeitabständen die in derselben Richtung angrenzenden Belüfterketten beaufschlagt werden.

3. Verfahren nach Anspruch 1 oder 2, dadurch gekennzeichnet, daß die Zeitabstände der vollen Luftbeaufschlagung der Belüfterketten in Abhängigkeit vom Sauerstoffgehalt, der Belastung und der Schlammdaten des Beckens gesteuert wird.

4. Verfahren nach wenigstens einem der Ansprüche 1 bis 3, dadurch gekennzeichnet, daß die Anzahl der voll luftbeaufschalgten Belüfterketten in Abhängigkeit des Sauerstoffgehaltes, der Belastung und des Schlammgehaltes des Beckens gesteuert wird.

5. Verfahren nach wenigstens einem der vorangegangenen Ansprüche, dadurch gekennzeichnet, daß die Wellenwandergeschwindigkeit so eingestellt wird, daß jede Belüfterkette ein- bis zehnmal pro Stunde vollbeaufschlagt wird.

6. Verfahren nach wenigstens einem der vorangegangenen Ansprüche, dadurch gekennzeichnet, daß die Zeitabstände der vollen Luftbeaufschlagung und/oder die Anzahl der voll Luft beaufschlagten Belüfterketten in Abhängigkeit von für den erforderlichen Sauerstoffeintrag maßgeblichen Parametern, wie Belastung und Schlammenge automatisch geregelt werden.

7. Verfahren nach Anspruch 1 bis 6, dadurch gekennzeichnet, daß nur ein Teil von mindestens 50% der Belüfterketten in beschriebener Weise variabel beaufschlagt wird, während der Rest der Belüfter einer festen oder nur in größeren Zeiträumen von einigen Stunden schwankenden Beaufschlagung unterliegt.

8. Verfahren nach Anspruch 6, dadurch gekennzeichnet, daß bei einer Anlage, die mit Schlammrückführung arbeitet, der Rücklauf von Belebtschlamm und von Rücklaufwasser in Abhängigkeit der Steuerung/Regelung der Luftbeaufschlagung der Belüfterketten gesteuert oder geregelt wird.

9. Verfahren nach wenigstens einem der vorangegangenen Ansprüche, dadurch gekennzeichnet, daß die Sauerstoffmenge, die jeweils über die voll luftbeaufschlagte Teilanzahl von Belüfterketten eingetragen wird größer ist als diejenige Eintragungsmenge, die sich für diese Teilanzahl ergeben würde, wenn alle Belüfterketten voll beaufschlagt wären.

**Revendications**

1. Procédé de purification biologique d'eaux usées dans les bassins faiblement chargés du type enterrés, dans lequel on place tout d'abord des chaînes d'aérateurs disposées avec un certain intervalle au-dessus de la surface du bassin, qui portent chacun plusieurs aérateurs de fond suspendus aux chaînes d'aérateurs, atteignant à un faible intervalle près le fond du bassin, dans lequel les chaînes d'aérateurs accomplissent lors du fonctionnement un mouvement de déplacement en va-et-vient, si bien que les aérateurs de fond balayent périodiquement le fond du bassin, caractérisé en ce que pour l'aération et la circulation des eaux usées et des boues activées, sur le nombre de chaînes d'aérateurs seule une fraction est alimentée en air à un moment donné, tandis que l'apport aux autres chaînes d'aérateurs est plus ou moins réduit, si bien que ce n'est que dans les zones du bassin pleinement alimentées en air que se produit une pleine circulation des eaux usées et des boues activées, l'alimentation complète en air étant réalisée avec un déplacement par vagues à des intervalles de temps déterminés d'une partie à l'autre des chaînes d'aérateurs.

2. Procédé selon la revendication 1, caractérisé en ce qu'à un moment déterminé deux chaînes d'aérateurs, séparées par au moins une chaîne d'aérateur peu ou pas alimentée en air, sont pleinement alimentées en air, et qu'ensuite, au bout des intervalles de temps déterminés les chaînes d'aérateurs voisines dans la même direction sont alimentées.

3. Procédé selon la revendication 1 ou 2, caractérisé en ce que les intervalles de temps d'alimentation complète en air des chaînes d'aérateurs sont réglés en fonction de la teneur en oxygène, de la charge et de la composition des boues du bassin.

4. Procédé selon au moins une des revendications 1 à 3, caractérisé en ce que le nombre des chaînes d'aérateurs pleinement alimentées en air est réglé en fonction de la teneur en oxygène, de la charge et de la teneur en boues du bassin.

5. Procédé selon au moins une des revendications précédentes, caractérisé en ce que la vitesse de déplacement des vagues est réglée de manière que chaque chaîne d'aérateur soit pleinement alimentée de une à dix fois par heure.

6. Procédé selon au moins une des revendications précédentes, caractérisé en ce que les intervalles de temps de pleine alimentation en air et/ou le nombre de chaînes d'aérateurs pleinement alimentées en air sont réglés automatiquement en fonction de paramètres déterminants pour l'apport d'oxygène nécessaire, comme la charge et la quantité de boue.

7. Procédé selon les revendications 1 à 6, caractérisé en ce que seule une partie d'au moins 50% des chaînes d'aérateurs est alimentée de façon variable de la manière décrite, tandis que le reste des aérateurs est soumis à une alimentation fixe ou ne variant qu'à de plus grands intervalles de temps, de l'ordre de plusieurs heures.

8. Procédé selon la revendication 6, caractérisé en ce que dans une installation qui travaille avec recyclage des boues, la réintroduction de boues activées ou d'eau recyclée est réglée ou commandée en fonction du réglage/commande de l'alimentation en air des chaînes d'aérateurs.

9. Procédé selon au moins une des revendications précédentes, caractérisé en ce que la quantité d'oxygène qui est introduite à chaque fois dans la totalité de la fraction des chaînes d'aérateurs entièrement alimentée en air est supérieure à la quantité qu'il conviendrait d'introduire dans cette fraction si toutes les chaînes d'aérateurs étaient pleinement alimentées.

**Claims**

1. Method for the biological purification of waste waters in weakly loaded tanks according to the earthen tank or basin construction procedure, in which aerator chains are fitted in spaced manner over the surface of a tank and in each case carry several bottom aerators suspended on the aerator chains and extending to a short distance above the tank bottom, the aerator chains performing in operation a reciprocating migrating movement, so that the bottom aerators periodically pass over the tank bottom, characterized in that for aerating and circulating waste water and activated sludge only some of the aerator chains are fully loaded with air at a particular time, whereas the supply to the other aerator chains is throttled to a greater or lesser extent, so that only in the fully air-loaded areas of the tank is there a full circulation of waste water and activated sludge and in which then the full air loading at specific time intervals is performed in wave-migrating manner between individual aerator chain groups.

2. Method according to claim 1, characterized in that at a specific time in each case two aerator chains separated by at least one unaerated or weakly aerated aerator chain are fully loaded with air and that then following the specific time intervals the aerator chains adjacent thereto in the same direction are loaded.

3. Method according to claims 1 or 2, characterized in that the time intervals for the full air loading of the aerator chains is controlled as a function of the oxygen content, the pollution load and the sludge data of the tank.

4. Method according to at least one of the claims 1 to 3, characterized in that the number of fully air-loaded aerator chains is controlled as a function of the oxygen content, the pollution load and the sludge content of the tank.

5. Method according to at least one of the preceding claims, characterized in that the wave migration speed is set in such a way that each aerator chain is fully air loaded one to ten times per hour.

6. Method according to at least one of the preceding claims, characterized in that the time intervals of the full air loading and/or the number of fully air-loaded aerator chains is automatically regulated as a function of parameters decisive for the necessary oxygen introduction, such as the pollution load and sludge quantity.

7. Method according to claims 1 to 6, characterized in that only part of at least 50% of the aerator chains are variably loaded in the described manner, whereas the remainder of the aerators are subject to a fixed loading or a loading only fluctuating in larger time periods of a few hours.

8. Method according to claim 6, characterized in that in a plant operating with sludge return, the return of activated sludge and return water is controlled or regulated as a function of the control or regulation of the air loading of the aerator chains.

9. Method according to at least one of the preceding claims, characterized in that the oxygen quantity in each case introduced over the fully air-loaded groups of aerator chains is larger than the introduction quantity which would occur for said group if all the aerator chains were fully air-loaded.

EP 0 249 172 B1

FIG.1  4  5  6  7  8  9  10  11

FIG.2

FIG.3a

FIG.3b

FIG.3c

EP 0 249 172 B1

FIG.4

FIG.5

FIG.6

EP 0 249 172 B1